# EUROPEAN PATENT SPECIFICATION

(11) **EP 0 514 988 B1**
(45) Date of publication and mention of the grant of the patent: **06.08.1997**
(21) Application number: 92201424.6
(22) Date of filing: 18.05.1992
(51) Int. Cl.: C09K 5/04, C10M 169/04, C10M 105/38

(54) **Fluid composition for compression refrigeration**
Flüssigzusammensetzung für Verdichtungskälteverfahren
Composition fluide pour réfrigération par compression

(30) Priority: 20.05.1991 GB 9110837
(43) Date of publication of application: 25.11.1992
(73) Proprietor: SHELL INTERNATIONALE RESEARCH MAATSCHAPPIJ B.V., 2596 HR Den Haag (NL)
(72) Inventor: Wilson, Arthur Colin, Maidstone, Kent ME14 4HB (GB); Koenders, Peter, NL-1031 CM Amsterdam (NL); Daegling, Stefan, W-2000 Hamburg 71 (DE)

(56) References cited:
- EP-A- 0 415 778
- EP-A- 0 430 657
- EP-A- 0 468 729
- EP-A- 0 480 479
- WO-A-90/12849
- US-A- 4 175 045
- DATABASE WPIL Derwent Publications Ltd., London, GB; AN 91-153165

## Description

This invention relates to fluid compositions for use in compression refrigeration, more particularly to such compositions containing fluorohydrocarbon refrigerant, to the preparation of such compositions and to their use as refrigeration fluid in compression refrigeration equipment.

Fluid compositions for use in compression refrigeration comprise mixtures of at least one refrigerant and at least one lubricant. Compression refrigeration equipment includes refrigerators and air-conditioners, including automobile, domestic and industrial air-conditioning systems. Problems of lubrication are particularly evident in automobile air-conditioning systems, because such systems are not separately lubricated, and a mixture of refrigerant and lubricant circulates through the entire system. It is therefore important that the refrigerant and the lubricant should be compatible (naturally soluble) over wide ranges of temperatures and concentrations.

In the past, chlorofluorocarbons e.g. R-11 (CFC-11), R-12 (CFC-12) and R-113 (CFC-113) have generally been used as refrigerants.

JP-A-55-155093 discloses the use of chlorofluorcarbon refrigerants, specifically R-12 (HCFC-12) (dichlorodifluoromethane) and R-22 (chlorodifluoromethane), in combination with, as lubricant, neopentyl polyol esters containing 0.005 to 5% w of trimethyl phosphate. The neopentyl polyol is preferably trimethylolpropane or pentaerythritol, esterified with straight-chain or branched saturated fatty acid esters, e.g. straight chain saturated fatty acids with 6 to 18 carbons such as caproic acid, enanthic acid, caprylic acid, pelargonic acid, capric acid, lauric acid, myristic acid, palmitic acid, or stearic acid, and synthetic branched saturated fatty acids with 8 to 18 carbons such as isocaprylic acid, 2-ethylhexoic acid, isononoic acid, isocapric acid, isolauric acid, isomyristic acid, isopalmitic acid or isostearic acid. 2-ethylhexoic acid is particularly preferred.

JP-A-61-171799 discloses the use of fluorocarbon refrigerants, the only named example of which is R-22 (HCFC-22) (chorodifluoromethane), in combination with, as lubricant, an ester-type oil together with, e.g. 0.02 to 10% w of, a hydroxy aryl fatty acid. The ester-type oil is preferably an ester of a monohydric alcohol and a dicarboxylic acid, an ester of a polyhydric alcohol, e.g. a neopentyl polyol, and a monocarboxylic acid, or as ester of a polyhydric alcohol and a mixture of monocarboxylic and dicarboxyl acids.

Owing to the ozone-depletion potential of most common chlorofluorocarbons (CFC's), global controls on their manufacture and application have been agreed under the Montreal Protocol (September 1987). Hydrofluorocarbons (HFC's) have been identified as potential alternatives to CFC's. Examples of HFC's include R-23 (HFC-23)(trifluoromethane), R-134 (HFC-134) (1,1,2,2-tetrafluoroethane), R-134a (HFC-134a) (1,1,1,2-tetrafluoroethane), R-143a (HFC-143a) (1,1,1-trifluoroethane) and R-152a (HFC-152a) (1,1-difluoroethane).

R-12 (CFC-12) (dichlorodifluoromethane) has been widely used in automobile air-conditioning systems and other compression-refrigeration equipment. R-134a (HF-134a)(1,1,1,2-tetrafluoroethane) has similar vapour pressure to R-12 and can in principle be used to replace R-12 without major redesign of existing compression -refrigeration equipment.

The problem that arises in relation to substitution of R-134a in place of R-12 is compatibility with lubricants. R-12 is compatible with mineral lubricating oils, whereas R-134a is not.

Polyalkylene glycols have been proposed as lubricants, e.g. Research Disclosure 17483, October 1978, by Du Pont and US Patent No. 4,755,316. However, of polyalkylene glycols it has been reported (Financial Times Wednesday November 28 1990, p14) ("FT article") that they "lubricated well but absorbed water and after a while began to react with other materials" in the compressors.

This same FT article states that "attention then switched to synthetic oils called polyol esters. Extensive testing of refrigeration equipment with these ester lubricants over the last few months has convinced the industry that they are the answer to its prayers. A combination of R-134a coolant with ester lubricant appears to work as well as R-12 plus mineral oil in domestic fridges, car air conditioners and small commercial refrigeration systems"

US Patent No. 4,851,144 proposes as lubricant compositions miscible with hydrofluorocarbon and hydrochlorofluorocarbon refrigerants, blends of polyether polyols with esters selected from esters of polyhydric alcohols with alkanoic acids and esters of alkanedioic acids with alkanols. In comparative test over temperature range -20°C to 85°C to determine upper solution critical temperature (USCT) using R-134a and various potential lubricants it was found (Table 1, Column 4) that a pentaerythritol tetraester of a mixture of alkanoic acids having 7-9 carbon atoms, 25% in R-134a, had USCT 80°C and trimethylol propane triheptonate, 16% w in R-134a, had USCT >83°C.

WO 90/12849 discloses liquid compositions useful as refrigeration liquids in refrigerators and air-conditioners, comprising a major amount of at least one fluorine containing hydrocarbon containing one or two carbon atoms, most preferably R-134a, and a minor amount of at least one soluble organic lubricant comprising at least one carboxylic ester of a polyhydroxy compound containing at least 2 hydroxy groups and characterised by the general formula

R[OC(O)R¹]ₙ

wherein R is a hydrocarbyl group, each R¹ is independently hydrogen, a straight chain lower (i.e. up to 7 carbon atoms) hydrocarbyl group, a branched chain hydrocarbyl group, or a straight chain hydrocarbyl group containing from 8 to about 22 carbon atoms provided that at least one R¹ group is hydrogen, a lower (i.e. up to 7 carbon atoms) straight chain hydrocarbyl or a branched chain hydrocarbyl group, or a carboxylic acid or carboxylic acid ester-containing hydrocarbyl group, and n is at least 2.

Specific examples of polyhydroxy compounds listed as useful in WO 90/12849 include ethylene glycol, diethylene glycol, triethylene glycol, propylene glycol, dipropylene glycol, glycerol, neopentyl glycol, 1,2-, 1,3- and 1,4-butanediols, pentaerythritol, dipentaerythritol, tripentaerythritol, triglycerol, trimethylolpropane, sorbitol, hexaglycerol, and 2,2,4-trimethyl-1,3-pentanediol.

Examples of carboxylic acids containing a straight chain lower hydrocarbyl group include formic acid, acetic acid, propionic acid, butyric acid, pentanoic acid, hexanoic acid and heptanoic acid. Examples of carboxylic acids wherein the hydrocarbyl group is a branched chain hydrocarbyl group include 2-ethyl-n-butyric acid, 2-hexyldecanoic acid, isostearic acid, 2-methylhexanoic acid, 3,5,5-trimethylhexanoic acid, 2-ethylhexanoic acid, neoheptanoic acid, neodecanoic acid, and commercial mixtures of branched chain carboxylic acids such as the mixture identified as "Neo 1214" acid (trade mark) from Exxon. Examples of higher molecular weight (8 to about 22 carbon atoms) straight chain acids include decanoic acid, dodecanoic acid, stearic acid, lauric acid, and behenic acid.

Of the specific Examples in WO 90/12849, Example 6 describes reaction of trimethylolpropane with a commercial C₈₋₁₀ straight chain methyl ester followed by reaction with acetic anhydride. Example 9 describes (in the present tense) reaction of pentaerythritol with neoheptanoic acid followed by reaction with acetic anhydride to esterify remaining hydroxyl groups.

WO 90/12849 describes tests in which 0.5 g of various candidate lubricants (ester) and 4.5g R-134a (i.e. mixtures containing 10% w ester) are mixed and, if the lubricant is soluble in the R-134a, temperature is reduced until separation and/or precipitation occurs. For Example 6 this temperature is -45°C. The lowest value obtained is -50°C. No value is given for Example 9.

EP-A-0430657 describes lubricant compositions containing a chlorine-free fluorocarbon in combination with neopentylpolyol esters of fatty acids. Of the specific examples in EP-A-0430657, Sample 6 describes an ester prepared from pentaerythritol and a mixture of butanoic acid and 2-methylpropionic acid, and Sample 12 describes an ester prepared from a mixture of pentaerythritol and dipentaerythritol and a mixture of pentanoic acid, 2-methylbutanoic acid and 3-methylbutanoic acid.

EP-A-0468729 describes mixtures of 1,1,1,2-tetrafluoroethane and esters of pentaerythritol. In the only specific preparation Example in EP-A-0468729, there is described the preparation of a mixture of esters of pentaerythritol and pentanoic acid and heptanoic acid.

EP-A-0435253 specifically describes refrigerator oils containing inter alia pentaerythritol and trimethylol propane esters with various hexanoic acids. WO 92/01030 specifically describes as lubricants several ester and ester mixtures derived from pentaerythritol/dipentaerythritol mixtures.

There has now surprisingly been found a defined class of polyol esters having significantly improved miscibility with R-134a, with respect to maximum and minimum miscibility temperatures, than any values hitherto reported.

According to the present invention there is provided a fluid composition for use in compression refrigeration comprising a mixture of
(a) at least one fluorohydrocarbon and
(b) at least one carboxylic ester of a polyhydroxy compound, having the general formula

   C(CH₂.O.CO.R)ₙ(R')₄₋ₙ (I)

   wherein n is 3 or 4, R' represents a methyl or ethyl group and each R independently represents a C₃₋₈ alkyl group containing 3 to 5 chain atoms, with the proviso that the fluid composition cannot comprise an ester of formula I in which n is 4 and R is selected from n-butyl, s-butyl, i-butyl, and 2,4,4-trimethylpentyl in combination with an ester prepared from dipentaerythritol and one or more acids selected from pentanoic acid, 2-methylbutanoic acid, 3-methylbutanoic acid, and 3,5,5-trimethylhexanoic acid, or in which n is 3, R¹ is ethyl and R is selected from n-butyl, s-butyl and i-butyl.

The fluorohydrocarbon may be, for example trifluoromethane, 1,1,2,2-tetrafluoroethane, 1,1,1,2-tetrafluoroethane, 1,1,1-trifluoroethane or 1,1-difluoroethane, or a mixture of any two or more thereof but is preferably a tetrafluoroethane, more preferably 1,1,1,2-tetrafluoroethane (R-134a).

Fluid compositions of the invention may generally comprise, for example, 50 to 99% w of the at least one fluorohydrocarbon. Preferably the composition comprises a mixture containing 70 to 99% w, e.g. 80 to 98% w, of the at least one fluorohydrocarbon and 1 to 30% w, e.g. 2 to 20% w, of the at least one carboxylic ester.

Where n in formula I is 3, the esters are esters of trimethylolethane or, preferably, trimethylolpropane. Most preferably in is 4, in which case the esters are esters of pentaerythritol.

Each R in formula I independently represents a C₃₋₈ alkyl group containing 3 to 5 chain atoms, By 3 to 5 chain atoms is meant that, starting with the carbon atom in R immediately adjacent the CH₂.O.CO. moiety, the longest linear chain of carbon atoms in the R moiety contains 3 to 5 carbon atoms. Thus, for example, a R moiety of formula -C(CH₃)₂CH₂CH₂CH₃ is a C₆ alkyl group containing 4 chain atoms, and a R moiety of formula -C(CH₃)(C₂H₅)₂ is a C₆ alkyl group containing 3 chain atoms. Preferably each R independently represents a C₄₋₆ alkyl group containing 3 to 4 chain atoms.

In accordance with a particularly preferred aspect of the invention there is provided a fluid composition for use in compression refrigeration comprising a mixture of at least one fluorohydrocarbon and at least one carboxylic ester of a polyhydroxy compound, wherein the at least one carboxylic ester of a polyhydroxy compound consists of at least one ester having the general formula

C(CH₂.O.CO.R)₄ (II)

wherein each R independently represents a C₃₋₈ alkyl group containing 3 to 5 chain atoms, more preferably a C₄₋₆ alkyl group containing 3 or 4 chain atoms. It will be appreciated that formula II corresponds to formula I wherein n is 4.

Although each R moiety may be a C₃₋₅ n-alkyl group (straight-chain alkyl group), in such cases the esters of formula I and II tend to have viscosity at 40°C (DIN 51 562) less than 20 mm²/s.

Preferably the ester of formula I or II is an ester having viscosity at 40°C (DIN 51 562) of at least 20 mm²/s wherein on average at least one R moiety is a branched alkyl group.

Fluid compositions in accordance with this invention may additionally include small quantities, e.g. 0.2 to 5%w, preferably 0.4 to 2.5%w, based on the weight of the at least one carboxylic ester, of each of one or more additives, such as thermal stabilisers (e.g. glycidyl ethers, for example phenyglycidyl ether), antiwear agents (e.g. steel/steel antiwear agents, for example "SANCTICIZER 154" (trade mark) ex Monsanto, and/or steel/aluminium antiwear agents, for example "VANLUBE 672" (trade mark) ex Vanderbilt) and metal passivators (e.g. copper passivators, for example "REOMET 39" (trade mark) ex Ciba Geigy).

The invention further comprises a process for the preparation of a fluid composition of the invention which comprises mixing at least one fluorohydrocarbon with at least one carboxylic acid ester of formula I as defined above.

The invention also comprises the use of a fluid composition of the invention as refrigeration fluid in compression refrigeration equipment, e.g. refrigerators and air-conditioners, including domestic and industrial air conditioning systems.

The carboxylic acid esters of formula I may readily be synthesised in known manner, e.g. by processes analogous to those described in WO 90/12849, or by processes according to or analogous to that described hereinafter in Example 1.

The invention will be further understood from the following illustrative Examples.

### EXAMPLES 1 TO 12

### Preparation of pentaerythritol tetrapentanoate (1)

To a mixture of pentaerythritol (227.9g, 2.0 mol) and pentanoic acid (887.2g, 8.6 mol) in a reactor fitted with a Dean and Stark trap was added, with stirring, under nitrogen, xylene (250ml) and methanesulphonic acid (40.8g, 0.4 mol). The resulting mixture was stirred under nitrogen for 5 hours at 140°C, before being cooled to ambient temperature (20°C), washed with 1M aqueous sodium hydroxide solution (2 x 500ml), washed with 10% w/v aqueous sodium sulphate solution (6 x 500 ml), dried (Na₂SO₄) filtered and evaporated under reduced pressure to yield pentaerythritol tetrapentanoate (1) (756g, 80%), characterised by viscosity at 40°C of 16.72 and at 100°C of 3.75 (DIN 51 562), viscosity index of 113 (DIN 150 2909) and saponification no. 484.7 (ASTM D1962-67).

Following analogous procedures, there were prepared a number of additional pentaerythritol esters (Examples 2 to 12). Details of these esters are given in Table 1 below, together with their viscosities at 40°C and 100°C (DIN 51 562), viscosity indices (VI) (DIN 150 2909), pour points (DIN IS0 3016) and saponification nos. (ASTM D 1962-67).

Miscibility of the various pentaerythritol esters with R134a refrigerant (1,1,1,2-tetrafluoromethane) was determined using a cryostat, a thermostat and glass tubes prepared according to DIN 51 351. Mixtures of refrigerant and pentaerythritol ester (concentrations determined gravimetrically) containing respectively 2% w and 20% w pentaerythritol ester were prepared in sealed glass tubes and the tubes were completely immersed in the temperature-controlled bath of the thermostat or cryostat. The bath fluid was then heated up or cooled down at a rate of 2°C/minute, and the temperature of phase separation was noted. Results are given in Table 1 following.

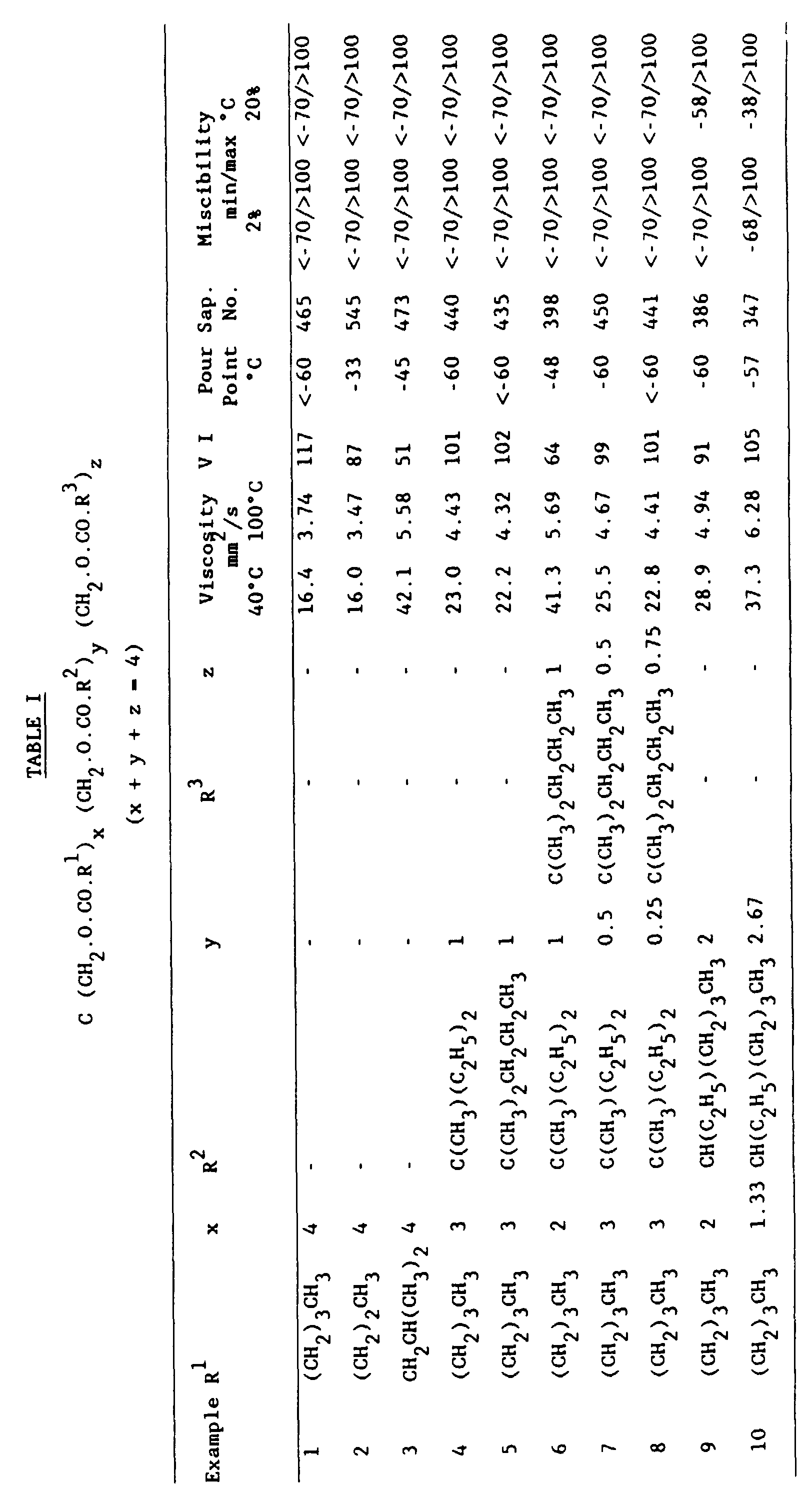

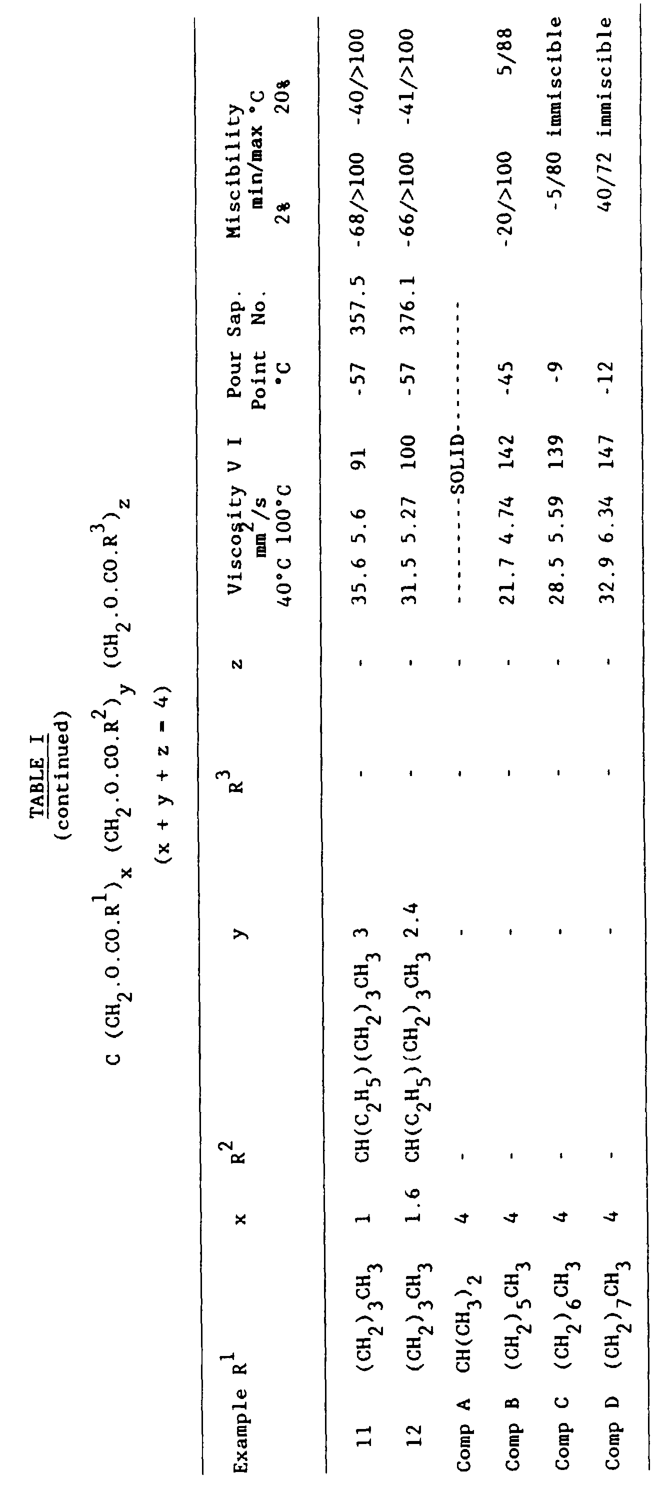

It will be seen that the miscibiity data for the examples of the invention is significantly superior to that obtained for Comparative Examples A to D. This is particularly marked for Examples 1 to 8, in which all the groups R¹ , R² and R³ are C₄₋₆ alkyl groups containing 3 or 4 chain atoms.

## Claims (Claims for the following Contracting State(s): DE, DK, GB, IT)

1. A fluid composition for use in compression refrigeration comprising a mixture of
(a) at least one fluorohydrocarbon and
(b) at least one carboxylic ester of a polyhydroxy compound, having the general formula
C(CH₂.O.CO.R)ₙ(R')₄₋ₙ (I)
wherein n is 3 or 4, R' represents a methyl or ethyl group and each R independently represents a C₃₋₈ alkyl group containing 3 to 5 chain atoms, with the proviso that the fluid composition cannot comprise an ester of formula I in which n is 4 and R is selected from n-butyl, s-butyl, i-butyl, and 2,4,4-trimethylpentyl in combination with an ester prepared from dipentaerythritol and one or more acids selected from pentanoic acid, 2-methylbutanoic acid and 3-methylbutanoic acid, and 3,5,5-trimethylhexanoic acid, or in which n is 3, R¹ is ethyl and R is selected from n-butyl, s-butyl, i-butyl, 1-ethylpentyl or 2,4,4-trimethylpentyl, or in which n is 4, and R is selected from 1-ethylpentyl and 2,4,4-trimethylpentyl.

2. A fluid composition according to Claim 1 wherein the fluorohydrocarbon is a tetrafluoroethane.

3. A fluid composition according to Claim 2 wherein the fluorohydrocarbon is 1,1,1,2-tetrafluoroethane.

4. A fluid composition according to any one of Claims 1 to 3 which comprises a mixture containing 70 to 99% w of the at least one fluorohydrocarbon and 1 to 30% w of the at least one carboxylic ester.

5. A fluid composition according to any one of Claims 1 to 4 wherein in formula I n is 4.

6. A fluid composition for use in compression refrigeration comprising a mixture of at least one fluorohydrocarbon and at least one carboxylic ester of a polyhydroxy compound, wherein the at least one carboxylic ester of a polyhydroxy compound consists of at least one ester having the general formula
C(CH₂.O.CO.R)₄ (II)
wherein each R independently represents a C₃₋₈ alkyl group containing 3 to 5 chain atoms.

7. A fluid composition according to any one of Claims 1 to 6 wherein in formula I or II each R independently represents a C₄₋₆ alkyl group containing 3 or 4 chain atoms.

8. A fluid composition according to any one of Claims 1 to 7 wherein the ester of formula I or II has viscosity at 40°C (DIN 51 562) of at least 20 mm²/s wherein on average at least one R moiety is a branched alkyl group.

9. A process for the preparation of a fluid composition according to any one of Claims 1 to 8 which comprises mixing at least one fluorohydrocarbon with at least one carboxylic ester of formula I as defined in Claim 1.

10. Use of a fluid composition according to any one of Claims 1 to 8 as refrigeration fluid in compression refrigeration equipment.

## Claims (Claims for the following Contracting State(s): BE, ES, FR, NL)

1. A fluid composition for use in compression refrigeration comprising a mixture of
(a) at least one fluorohydrocarbon and
(b) at least one carboxylic ester of a polyhydroxy compound, having the general formula
C(CH₂.O.CO.R)ₙ(R')₄₋ₙ (I)
wherein n is 3 or 4, R' represents a methyl or ethyl group and each R independently represents a C₃₋₈ alkyl group containing 3 to 5 chain atoms, with the proviso that the fluid composition cannot comprise an ester of formula I in which n is 4 and R is selected from n-butyl, s-butyl, i-butyl, and 2,4,4-trimethylpentyl in combination with an ester prepared from dipentaerythritol and one or more acids selected from pentanoic acid, 2-methylbutanoic acid, 3-methylbutanoic acid, and 3,5,5-trimethylhexanoic acid, or in which n is 3, R¹ is ethyl and R is selected from n-butyl, s-butyl and i-butyl.

2. A fluid composition according to Claim 1 wherein the fluorohydrocarbon is a tetrafluoroethane.

3. A fluid composition according to Claim 2 wherein the fluorohydrocarbon is 1,1,1,2-tetrafluoroethane.

4. A fluid composition according to any one of Claims 1 to 3 which comprises a mixture containing 70 to 99% w of the at least one fluorohydrocarbon and 1 to 30% w of the at least one carboxylic ester.

5. A fluid composition according to any one of Claims 1 to 4 wherein in formula I n is 4.

6. A fluid composition for use in compression refrigeration comprising a mixture of at least one fluorohydrocarbon and at least one carboxylic ester of a polyhydroxy compound, wherein the at least one carboxylic ester of a polyhydroxy compound consists of at least one ester having the general formula
C(CH₂.O.CO.R)₄ (II)
wherein each R independently represents a C₃₋₈ alkyl group containing 3 to 5 chain atoms.

7. A fluid composition according to any one of Claims 1 to 6 wherein in formula I or II each R independently represents a C₄₋₆ alkyl group containing 3 or 4 chain atoms.

8. A fluid composition according to any one of Claims 1 to 7 wherein the ester of formula I or II has viscosity at 40°C (DIN 51 562) of at least 20 mm²/s wherein on average at least one R moiety is a branched alkyl group.

9. A process for the preparation of a fluid composition according to any one of Claims 1 to 8 which comprises mixing at least one fluorohydrocarbon with at least one carboxylic ester of formula I as defined in Claim 1.

10. Use of a fluid composition according to any one of Claims 1 to 8 as refrigeration fluid in compression refrigeration equipment.

## Patentansprüche (Patentansprüche für folgende(n) Vertragsstaat(en): DE, DK, GB, IT)

1. Fluidzusammensetzung zur Anwendung in Kompressionskälteanlagen, umfassend ein Gemisch aus
(a) wenigstens einem Fluorkohlenwasserstoff und
(b) wenigstens einem Carbonsäureester einer Polyhydroxyverbindung mit der allgemeinen Formel
C(CH₂.O.CO.R)ₙ(R')₄₋ₙ (I),
worin n den Wert 3 oder 4 aufweist, R' für eine Methyl- oder Ethylgruppe steht und jeder Rest R unabhängig voneinander für eine C₃₋₈-Alkylgruppe mit einem Gehalt an 3 bis 5 Kettenatomen steht, mit der Maßgabe, daß die Fluidzusammensetzung nicht einen Ester der Formel (I) umfassen kann, worin n den Wert 4 darstellt und R unter n-Butyl, sek-Butyl, iso-Butyl und 2,4,4-Trimethylpentyl ausgewählt ist, in Kombination mit einem aus Dipentaerythrit und einer oder mehreren Säuren hergestellten Ester, welche Säuren unter Pentansäure, 2-Methylbutansäure, 3-Methylbutansäure und 3,5,5-Trimethylhexansäure ausgewählt sind, oder worin n den Wert 3 hat, R' Ethyl bedeutet und R unter n-Butyl, sek-Butyl, iso-Butyl, 1-Ethylpentyl oder 2,4,4-Trimethylpentyl ausgewählt ist, oder worin n den Wert 4 hat und R unter 1-Ethylpentyl und 2,4,4-Trimethylpentyl ausgewählt ist.

2. Fluidzusammensetzung nach Anspruch 1, worin der Fluorkohlenwasserstoff ein Tetrafluorethan ist.

3. Fluidzusammensetzung nach Anspruch 2, worin der Fluorkohlenwasserstoff 1,1,1,2-Tetrafluorethan ist.

4. Fluidzusammensetzung nach einem der Ansprüche 1 bis 3, welches ein Gemisch mit einem Gehalt an 70 bis 99 Gew.-% des wenigstens einen Fluorkohlenwasserstoffes und 1 bis 30 Gew.-% des wenigstens einen Carbonsäureesters umfaßt.

5. Fluidzusammensetzung nach einem der Ansprüche 1 bis 4, worin in Formel I n den Wert 4 aufweist.

6. Fluidzusammensetzung zur Anwendung in Kompressionskälteanlagen, umfassend ein Gemisch aus wenigstens einem Fluorkohlenwasserstoff und wenigstens einem Carbonsäureester eine Polyhydroxyverbindung, worin der wenigstens eine Carbonsäureester einer Polyhydroxyverbindung aus wenigstens einem Ester mit der allgemeinen Formel
C(CH₂.O.CO.R)₄ (II)
besteht, worin jeder Rest R unabhängig voneinander eine C₃₋₈-Alkylgruppe mit einem Gehalt an 3 bis 5 Kettenatomen darstellt.

7. Fluidzusammensetzung nach einem der Ansprüche 1 bis 6, worin in Formel I oder II jeder Rest R unabhängig voneinander eine C₄₋₆-Alkylgruppe mit einem Gehalt an 3 oder 4 Kettenatomen darstellt.

8. Fluidzusammensetzung nach einem der Ansprüche 1 bis 7, worin der Ester der Formel I oder II eine Viskosität bei 40°C (DIN 51 562) von wenigstens 20 mm²/sek aufweist, wobei im Durchschnitt wenigstens ein Rest R eine verzweigte Alkylgruppe darstellt.

9. Verfahren zur Herstellung einer Fluidzusammensetzung nach einem der Ansprüche 1 bis 8, welches ein Mischen wenigstens eines Fluorkohlenwasserstoffes mit wenigstens einem Carbonsäureester der Formel I, wie in Anspruch 1 definiert, umfaßt.

10. Verwendung einer Fluidzusammensetzung nach einem der Ansprüche 1 bis 8 als Kältemittel in Kompressionskälteanlagen.

## Patentansprüche (Patentansprüche für folgende(n) Vertragsstaat(en): BE, ES, FR, NL)

1. Fluidzusammensetzung zur Anwendung in Kompressionskälteanlagen, umfassend ein Gemisch aus
(a) wenigstens einem Fluorkohlenwasserstoff und
(b) wenigstens einem Carbonsäureester einer Polyhydroxyverbindung mit der allgemeinen Formel
C(CH₂.O.CO.R)ₙ(R')₄₋ₙ (I),
worin n den Wert 3 oder 4 aufweist, R' für eine Methyl- oder Ethylgruppe steht und jeder Rest R unabhängig voneinander für eine C₃₋₈-Alkylgruppe mit einem Gehalt an 3 bis 5 Kettenatomen steht, mit der Maßgabe, daß die Fluidzusammensetzung nicht einen Ester der Formel (I) umfassen kann, worin n den Wert 4 darstellt und R unter n-Butyl, sek-Butyl, iso-Butyl und 2,4,4-Trimethylpentyl ausgewählt ist, in Kombination mit einem aus Dipentaerythrit und einer oder mehreren Säuren hergestellten Ester, welche Säuren unter Pentansäure, 2-Methylbutansäure, 3-Methylbutansäure und 3,5,5-Trimethylhexansäure ausgewählt sind, oder worin n den Wert 3 hat, R' Ethyl bedeutet und R unter n-Butyl, sek-Butyl und iso-Butyl ausgewählt ist.

2. Fluidzusammensetzung nach Anspruch 1, worin der Fluorkohlenwasserstoff ein Tetrafluorethan ist.

3. Fluidzusammensetzung nach Anspruch 2, worin der Fluorkohlenwasserstoff 1,1,1,2-Tetrafluorethan ist.

4. Fluidzusammensetzung nach einem der Ansprüche 1 bis 3, welches ein Gemisch mit einem Gehalt an 70 bis 99 Gew.-% des wenigstens einen Fluorkohlenwasserstoffes und 1 bis 30 Gew.-% des wenigstens einen Carbonsäureesters umfaßt.

5. Fluidzusammensetzung nach einem der Ansprüche 1 bis 4, worin in Formel I n den Wert 4 aufweist.

6. Fluidzusammensetzung zur Anwendung in Kompressionskälteanlagen, umfassend ein Gemisch aus wenigstens einem Fluorkohlenwasserstoff und wenigstens einem Carbonsäureester eine Polyhydroxyverbindung, worin der wenigstens eine Carbonsäureester einer Polyhydroxyverbindung aus wenigstens einem Ester mit der allgemeinen Formel
C(CH₂.O.CO.R)₄ (II)
besteht, worin jeder Rest R unabhängig voneinander eine C₃₋₈-Alkylgruppe mit einem Gehalt an 3 bis 5 Kettenatomen darstellt.

7. Fluidzusammensetzung nach einem der Ansprüche 1 bis 6, worin in Formel I oder II jeder Rest R unabhängig voneinander eine C₄₋₆-Alkylgruppe mit einem Gehalt an 3 oder 4 Kettenatomen darstellt.

8. Fluidzusammensetzung nach einem der Ansprüche 1 bis 7, worin der Ester der Formel I oder II eine Viskosität bei 40°C (DIN 51 562) von wenigstens 20 mm²/sek aufweist, wobei im Durchschnitt wenigstens ein Rest R eine verzweigte Alkylgruppe darstellt.

9. Verfahren zur Herstellung einer Fluidzusammensetzung nach einem der Ansprüche 1 bis 8, welches ein Mischen wenigstens eines Fluorkohlenwasserstoffes mit wenigstens einem Carbonsäureester der Formel I, wie in Anspruch 1 definiert, umfaßt.

10. Verwendung einer Fluidzusammensetzung nach einem der Ansprüche 1 bis 8 als Kältemittel in Kompressionskälteanlagen.

## Revendications (Revendications pour l'(les) Etat(s) contractant(s) suivant(s): DE, DK, GB, IT)

1. Composition de fluide à utiliser, en vue de la réfrigération par compression, comprenant un mélange de
(a) au moins un fluorohydrocarbure et
(b) au moins un ester carboxylique d'un composé polyhydroxylé, répondant à la formule générale suivante :
C(CH₂.O.CO.R)ₙ(R')₄₋ₙ (I)
dans laquelle n est égal à 3 ou à 4, R' représente le radical méthyle ou éthyle et chaque symbole R représente, indépendamment, un groupe alkyle en C₃ à C₈ contenant de 3 à 5 atomes de carbone, avec la condition que la composition de fluide ne puisse comprendre d'ester de la formule I, dans laquelle n es égal à 4 et R est choisi parmi les radicaux n-butyle, s-butyle, i-butyle et 2,4,4-triméthylpentyle, en combinaison avec un ester préparé à partir du dipentaérythritol et d'un ou plusieurs acides choisis parmi l'acide pentanoïque, l'acide 2-méthylbutanoïque, l'acide 3-méthylbutanoïque et l'acide 3,5,5-triméthylhexanoïque, ou dans laquelle n est égal à 3, R¹ représente le radical éthyle et R est choisi parmi les radicaux n-butyle, s-butyle et i-butyle, 1-éthylpentyle ou 2,4,4-triméthylpentyle ou dans laquelle n est égal à 4, et R est choisi parmi les radicaux 1-éthylpentyle et 2,4,4-triméthylpentyle.

2. Composition de fluide suivant la revendication 1, caractérisée en ce que le fluorohydrocarbure est un tétrafluoréthane.

3. Composition de fluide suivant la revendication 2, caractérisée en ce que le fluorohydrocarbure est le 1,1,1 ,2-tétrafluoréthane.

4. Composition de fluide suivant l'une quelconque des revendications 1 à 3, caractérisée en ce qu'elle comprend un mélange contenant 70 à 99% en poids, de l'au moins un fluorohydrocarbure et 1 à 30% en poids de l'au moins un ester carboxylique.

5. Composition de fluide suivant l'une quelconque des revendications 1 à 4, caractérisée en ce que n est égal à 4 dans la formule I.

6. Composition de fluide à utiliser, pour la réfrigération par compression, qui comprend un mélange d'au moins un fluorohydrocarbure et d'au moins un ester carboxylique d'un composé polyhydroxylé, où l'au moins un ester carboxylique d'un composé polyhydroxylé est constitué d'au moins un ester répondant à la formule générale
C(CH₂.O.CO.R)₄ (II)
dans laquelle chaque symbole R représente indépendamment un radical alkyle en C₃ à C₈, contenant 3 à 5 atomes de chaîne.

7. Composition de fluide suivant l'une quelconque des revendications 1 à 6, caractérisée en ce que chaque symbole R représente indépendamment un groupe alkyle en C₄ à C₆, contenant 3 ou 4 atomes de chaîne dans la formule I ou Il.

8. Composition de fluide suivant l'une quelconque des revendications 1 à 7, caractérisée en ce que l'ester de la formule I ou II possède une viscosité à 40°C (DIN 51 562) d'au moins 20 mm²/s, où en moyenne, au moins un radical R est un groupe alkyle ramifié.

9. Procédé de préparation d'une composition de fluide suivant l'une quelconque des revendications 1 à 8, caractérisé en ce que l'on mélange au moins un fluorohydrocarbure à au moins un ester carboxylique de la formule I, suivant la revendication 1.

10. Utilisation d'une composition de fluide suivant l'une quelconque des revendications 1 à 8, à titre de fluide de réfrigération dans un équipement de réfrigération par compression.

## Revendications (Revendications pour l'(les) Etat(s) contractant(s) suivant(s): BE, ES, FR, NL)

1. Composition de fluide à utiliser, en vue de la réfrigération par compression, comprenant un mélange de
(a) au moins un fluorohydrocarbure et
(b) au moins un ester carboxylique d'un composé polyhydroxylé, répondant à la formule générale suivante :
C(CH₂.O.CO.R)ₙ(R')₄₋ₙ (I)
dans laquelle n est égal à 3 ou à 4, R' représente le radical méthyle ou éthyle et chaque symbole R représente, indépendamment, un groupe alkyle en C₃ à C₈ contenant de 3 à 5 atomes de carbone, avec la condition que la composition de fluide ne puisse comprendre d'ester de la formule I, dans laquelle n es égal à 4 et R est choisi parmi les radicaux n-butyle, s-butyle, i-butyle et 2,4,4-triméthylpentyle, en combinaison avec un ester préparé à partir du dipentaérythritol et d'un ou plusieurs acides choisis parmi l'acide pentanoïque, l'acide 2-méthylbutanoïque, l'acide 3-méthylbutanoïque et l'acide 3,5,5-triméthylhexanoïque, ou dans laquelle n est égal à 3, R¹ représente le radical éthyle et R est choisi parmi les radicaux n-butyle, s-butyle et i-butyle.

2. Composition de fluide suivant la revendication 1, caractérisée en ce que le fluorohydrocarbure est un tétrafluoréthane.

3. Composition de fluide suivant la revendication 2, caractérisée en ce que le fluorohydrocarbure est le 1,1,1,2-tétrafluoréthane.

4. Composition de fluide suivant l'une quelconque des revendications 1 à 3, caractérisée en ce qu'elle comprend un mélange contenant 70 à 99% en poids, de l'au moins un fluorohydrocarbure et 1 à 30% en poids de l'au moins un ester carboxylique.

5. Composition de fluide suivant l'une quelconque des revendications 1 à 4, caractérisée en ce que n est égal à 4 dans la formule I.

6. Composition de fluide à utiliser, pour la réfrigération par compression, qui comprend un mélange d'au moins un fluorohydrocarbure et d'au moins un ester carboxylique d'un composé polyhydroxylé, où l'au moins un ester carboxylique d'un composé polyhydroxylé est constitué d'au moins un ester répondant à la formule générale
C(CH₂.O.CO.R)₄ (II)
dans laquelle chaque symbole R représente indépendamment un radical alkyle en C₃ à C, contenant 3 à 5 atomes de chaîne.

7. Composition de fluide suivant l'une quelconque des revendications 1 à 6, caractérisée en ce que chaque symbole R représente indépendamment un groupe alkyle en C₄ à C₆, contenant 3 ou 4 atomes de chaîne dans la formule I ou Il.

8. Composition de fluide suivant l'une quelconque des revendications 1 à 7, caractérisée en ce que l'ester de la formule I ou II possède une viscosité à 40°C (DIN 51 562) d'au moins 20 mm²/s, où en moyenne, au moins un radical R est un groupe alkyle ramifié.

9. Procédé de préparation d'une composition de fluide suivant l'une quelconque des revendications 1 à 8, caractérisé en ce que l'on mélange au moins un fluorohydrocarbure à au moins un ester carboxylique de la formule 1, suivant la revendication 1.

10. Utilisation d'une composition de fluide suivant l'une quelconque des revendications 1 à 8, à titre de fluide de réfrigération dans un équipement de réfrigération par compression.
